**Europäisches Patentamt**

**European Patent Office**

**Office européen des brevets**

(19)

(11) **EP 1 251 489 A2**

(12) **EUROPÄISCHE PATENTANMELDUNG**

(43) Veröffentlichungstag:
**23.10.2002 Patentblatt 2002/43**

(51) Int Cl.⁷: **G10L 15/06**

(21) Anmeldenummer: **02100392.6**

(22) Anmeldetag: **18.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.04.2001 DE 10119284**

(71) Anmelder:
• **Philips Corporate Intellectual Property GmbH**
**20099 Hamburg (DE)**
Benannte Vertragsstaaten:
**DE**

• **Koninklijke Philips Electronics N.V.**
**5621 BA Eindhoven (NL)**

(72) Erfinder:
• **Schramm, Hauke,**
**c/o Philips Corporate Int Prp GmbH**
**52066, Aachen (DE)**
• **Beyerlein, Peter, c/o Philips Corp Int Prop GmbH**
**52066, Aachen (DE)**

(74) Vertreter: **Volmer, Georg, Dipl.-Ing. et al**
**Philips Corporate Intellectual Property GmbH,**
**Weisshausstrasse 2**
**52066 Aachen (DE)**

(54) **Training von Parametern eines Spracherkennungssystems zur Erkennung von Aussprachevarianten**

(57) Die Erfindung bezieht sich auf ein Verfahren zum Training von Parametern eines Mustererkennungssystems, die jeweils genau einer Realisierungsvariante eines Inventarmusters zugeordnet sind, mit den Schritten:

- Bereitstellung einer Trainingsmenge von Mustern, und
- Bestimmung der Parameter durch diskriminative Optimierung einer Zielfunktion, sowie auf ein System zur Ausführung des Verfahrens.

FIG. 2

EP 1 251 489 A2

**Beschreibung**

Die Erfindung betrifft ein Verfahren und System zum Training von Parametern eines Mustererkennungssystems, die jeweils genau einer Realisierungsvariante eines Inventarmusters zugeordnet sind, und insbesondere ein Verfahren und System zum Training von Parametern eines Spracherkennungssystems, die jeweils genau einer Aussprachevariante eines Vokabularwortes zugeordnet sind.

Mustererkennungssysteme und insbesondere Spracherkennungssysteme werden für eine Vielzahl von Anwendungen eingesetzt. Beispiele sind automatische telefonische Auskunftssysteme wie z. B. die Flugauskunft der Lufthansa, automatische Diktiersysteme wie z. B. FreeSpeech von der Firma Philips, Handschrifterkennung wie z. B. die bei der Deutschen Post eingesetzten automatischen Adresserkennungssysteme und die zur Personenidentifizierung vielfach vorgeschlagenen biometrischen Systeme zur Erkennung z. B. von Fingerabdrücken, der Iris oder von Gesichtern. Insbesondere können solche Mustererkennungssysteme auch als Bestandteil allgemeinerer Musterverarbeitungssysteme eingesetzt werden, wie das eben erwähnte Beispiel der Personenidentifizierung zeigt.

Zur Erkennung unbekannter Testmuster setzen viele bekannte Systeme statistische Verfahren zum Vergleich der Testmuster mit im System bekannten Referenzmustern ein. Zur Kennzeichnung der Referenzmuster werden diese geeignet parametrisiert und die Parameter im Mustererkennungssystem gespeichert. So verwenden z. B. viele Spracherkennungssysteme als Erkennungseinheiten ein Vokabular aus einzelnen Worten, die für den akustischen Vergleich mit einer unbekannten sprachlichen Äußerung noch in so genannte Subwort-Einheiten zerlegt werden. Bei diesen "Worten" kann es sich dabei einerseits um Worte im linguistischen Sinn handeln, im Zusammenhang der Spracherkennung ist es jedoch üblich, den Wortbegriff auch breiter zu fassen Bei einer Buchstabieranwendung kann z. B. auch ein einzelner Buchstabe ein Wort bilden, andere Systeme verwenden Silben oder auch statistisch bestimmte Bruchstücke linguistischer Worte als Worte im Sinne ihres Erkennungsvokabulars.

Die Schwierigkeit der automatischen Spracherkennung besteht u. a. darin, dass Worte sehr unterschiedlich ausgesprochen werden können. Solche Unterschiede ergeben sich zum einen zwischen verschiedenen Sprechern, können vom Erregungszustand eines Sprechers abhängen und werden von Dialekt beeinflusst, den der Sprecher bei der Artikulation des Wortes gerade benutzt. Zum anderen können insbesondere häufige Worte in spontaner Sprache mit einer anderen Lautfolge ausgesprochen werden, als dies bei gelesener Sprache typisch ist. So ist es z. B. üblich, die Aussprache von Worten zu verkürzen: "möchte" kann zu "möcht'" werden und "eine" zu "ne".

Zur Modellierung unterschiedlicher Aussprachen ein- und desselben Wortes verwenden manche Systeme so genannte Aussprachevarianten Kann z. B. das $l$-te Wort $w_l$ des Vokabulars $V$ auf verschiedene Weisen ausgesprochen werden, so kann man die $j$-te Ausspracheweise dieses Wortes durch Einführen einer Aussprachevariante $v_{lj}$ modellieren. Die Aussprachevariante $v_{lj}$ setzt sich dann aus denjenigen Subwort-Einheiten zusammen, die für die $j$-te Ausspracheweise von $w_l$ passend sind. Als Subwort-Einheiten zur Bildung der Aussprachevarianten können Phoneme benutzt werden, welche die elementaren Laute einer Sprache modellieren. Es werden aber auch statistisch abgeleitete Subwort-Einheiten verwendet. Oftmals werden als unterste Ebene der akustischen Modellierung so genannte Hidden-Markov-Modelle (HMMs) eingesetzt.

Während im Vorigen das in der Spracherkennung benutzte Konzept der Aussprachevariante eines Wortes erläutert wurde, ist dieses Konzept in gleicher Weise auf die Realisierungsvariante eines Inventarmusters eines Mustererkennungssystems anwendbar. Die Vokabularworte eines Spracherkennungssystems entsprechen den Inventarmustern, d. h den Erkennungseinheiten eines Mustererkennungssystems. Genau wie Worte unterschiedlich ausgesprochen werden können, können auch die Inventarmuster auf unterschiedliche Weisen realisiert werden. So lassen sich Worte hand- oder maschinenschriftlich unterschiedlich niederschreiben und eine bestimmte Mimik wie z. B. ein Lächeln kann je nach Person und Situation unterschiedlich ausgeprägt werden. In diesem Sinne sind die Überlegungen der Erfindung auf das Training von jeweils genau einer Realisierungsvariante eines Inventarmusters zugeordneten Parametern eines allgemeinen Mustererkennungssystems anwendbar, auch wenn sie in dieser Schrift aus Gründen der Darstellungsökonomie hauptsächlich im Rahmen eines Spracherkennungssystems offenbart werden.

Wie bereits eingangs dargelegt, vergleichen viele Mustererkennungssysteme ein unbekanntes Testmuster mit den in ihrem Inventar abgelegten Referenzmustern, um zu bestimmen, ob und welchem der Referenzmuster das Testmuster entspricht. Dazu werden, wie gesagt, die Referenzmuster in geeigneter Form parametrisiert und die Parameter im Mustererkennungssystem gespeichert. Insbesondere auf statistischen Methoden basierende Mustererkennungssysteme berechnen dabei Bewertungen, wie gut ein Referenzmuster zu einem Testmuster passt, und versuchen, möglichst das Referenzmuster mit der höchsten Bewertung zu finden, das dann als Erkennungsergebnis für das Testmuster ausgegeben wird. Einer solchen allgemeinen Vorgehensweise folgend fließen in eine derartige Bewertung bei Verwendung von Aussprachevarianten entsprechende Bewertungen ein, wie gut eine sprachliche Äußerung zu einer Aussprachevariante passt und wie gut die Aussprachevariante zu einem Wort passt, d. h. im letzteren Fall eine Bewertung dazu, ob ein Sprecher das Wort mit dieser Aussprachevariante ausgesprochen hat.

Manche Spracherkennungssysteme verwenden als Bewertungen Größen, die eng mit Wahrscheinlichkeitsmodellen verbunden sind Dies kann sich dann beispielsweise folgendermaßen darstellen: Aufgabe des Spracherkennungssystems ist es, zu einer sprachlichen Äußerung $x$ diejenige Wortfolge $w^N = (\hat{w}_1, \hat{w}_2, ..., \hat{w}_N)$ von $N$ Worten, wobei $N$ unbekannt ist, zu finden, die von allen möglichen Wortfolgen $w_1^{N'}$ mit allen möglichen Längen $N'$ am besten zur sprachlichen Äußerung $x$ passt, d. h. im Rahmen des Wahrscheinlichkeitsmodells die unter der Bedingung $x$ höchste bedingte Wahrscheinlichkeit aufweist:

$$\hat{w}_1^N = \arg\max_{w_1^{N'}} p(w_1^{N'} \mid x). \tag{1}$$

Durch die Anwendung der Bayes'schen Formel erhält man daraus die bekannte Modelltrennung:

$$\hat{w}_1^N = \arg\max_{w_1^{N'}} p(x \mid w_1^{N'}) \cdot p(w_1^{N'}). \tag{2}$$

Die zu den Wortfolgsn $w_1^{N'}$ gehörigen möglichen Aussprachevariantenfolgen $v_1^{N'}$ lassen sich durch Summation einführen:

$$p(x \mid w_1^{N'}) = \sum_{v_1^{N'}} p(x \mid v_1^{N'}) \cdot p(v_1^{N'} \mid w_1^{N'}), \tag{3}$$

da angsnommen wird, dass die Abhängigkeit der sprachlichen Äußerung $x$ von der Aussprachevariantenfolgs $v_1^{N'}$ und der Wortfolge $w^{N'}$ ausschließlich durch die Aussprachevariantenfolge $v^{N'}$ gegeben ist.

Zur weiteren Modellierung der Abhängigkeit $p(v_1^{N'} \mid w_1^{N'})$ wird üblicherweise eine so genannte Unigrammannahme gemacht, welche Kontexteinflüsse vernachlässigt:

$$p(v_1^{N'} \mid w_1^{N'}) = \prod_{i=1}^{N'} p(v_i \mid w_i). \tag{4}$$

Bezeichnet man mit $w_l$ das $l$-te Wort des Vokabulars $V$ des Spracherkennungssystems, mit $v_{lj}$ die $j$-te Aussprachevariante dieses Wortes und mit $h_{lj}(v^{N'})$ die Häufigkeit, mit der die Aussprachevariante $v_{lj}$ in der Aussprachevariantenfolge $v^{N'}$ auftritt (z. B. ist die Häufigkeit der Aussprachevariante "'ne" in der Äußerung "Gib' mir 'mal'ne Tasse Kaffee!" gleich 1, die der Aussprachevariante "eine" dagegen 0), so kann man den letzt genannten Ausdruck auch folgendermaßen schreiben:

$$p(v_1^{N'} \mid w_1^{N'}) = \prod_{l=1}^{D} [\, p(v_{lj} \mid w_l) \,]^{h_{lj}(v_1^{N'})}, \tag{5}$$

wobei die Produktbildung jetzt über alle $D$ Worte des Vokabulars $V$ ausgeführt wird.

In diesem Fall sind die Größen $p(v_{lj} \mid w_l)$, d. h. die bedingten Wahrscheinlichkeiten, dass die Aussprachevariante $v_{lj}$ beim Wort $w_l$ gesprochen wird, Parameter des Spracherkennungssystems, die jeweils genau einer Aussprachevariante eines Vokabularwortes zugeordnet sind. Sie werden im Verlauf des Trainings des Spracherkennungssystems auf einer Trainingsmenge von als akustischen Sprachsignalen vorliegenden sprachlichen Äußerungen geeignet geschätzt, und ihre Schätzwerte fließen bei der Erkennung unbekannter Testäußerungen über die obigen Formeln in die Bewertung der Erkennungsalternativen ein. Während für die vorhergehende Darstellung der in der Mustererkennung übliche Wahrscheinlichkeitsformalismus verwendet wurde, ist es für den Fachmann klar, dass in der Praxis üblicherweise allgemeine Bewertungsfunktionen eingesetzt werden, die nicht notwendigerweise die Bedingungen einer Wahrscheinlichkeit erfüllen. So wird z. B. auf die Erfüllung der Normierungsbedingung einer Wahrscheinlichkeit oft keinen Wert gelegt, oder statt einer Wahrscheinlichkeit $p$ wird häufig eine mit einem Parameter $\lambda$ exponentiell verzerrte

Größe $p^\lambda$ eingesetzt. Auch arbeiten viele Systeme mit den negativen Logarithmen dieser Größen: $-\lambda \log p$, die dann im englischen Sprachgebrauch oft als "score" bezeichnet werden. Entsprechend sind auch in diesem Dokument, wenn von Wahrscheinlichkeiten gesprochen wird, die allgemeineren dem Fachmann geläufigen Bewertungsfunktionen mit eingeschlossen.

Zum Training der Parameter $p(v_{lj} \mid w_l)$ eines Spracherkennungssystems, die jeweils genau einer Aussprachevariante $v_{lj}$ eines Vokabularwortes $w_l$ zugeordnet sind, werden in vielen Spracherkennungssystemen so genannte "maximum likelihood" Methoden verwendet. So lässt sich z. B. auf der Trainingsmenge bestimmen, wie oft die jeweiligen Varianten $v_{lj}$ der Vokabularworte $w_l$ gesprochen werden. Die auf der Trainingsmenge beobachteten relativen Häufigkeiten $f_{rel}(v_{lj} \mid w_l)$ dienen dann z. B. direkt als Schätzwerte für die Parameter $p(v_{lj} \mid w_l)$ oder werden zunächst noch bekannten statistischen Glättungsverfahren wie beispielsweise einem "discounting" unterzogen.

Die US 6,076,053 dagegen offenbart ein Verfahren, bei dem die Aussprachevarianten eines Vokabularwortes in einem Aussprachenetzwerk verschmolzen werden (merging the obtained pronunciations into a pronunciation networks structure). Die Kanten (arcs) eines solchen Aussprachenetzwerkes bestehen aus den Subwort-Einheiten, z. B. Phonemen in Form von HMMs, (subword (phoneme) HMMs assigned to the specific arc) der Aussprachevarianten. Zur Bewertung der Frage, ob eine bestimmte Aussprachevariante $v_{lj}$ eines Vokabularwortes $w_l$ gesprochen wird, werden auf Ebene der Kanten des Aussprachenetzwerkes oder auch auf der Unterebene der HMM-Zustände der Kanten multiplikative, additive und phonemdauerbezogene Gewichtsparameter (weight multiplicative term... weight additive term... phone duration weighting) eingeführt.

In der in der US 6,076,053 offenbarten Vorgehensweise werden die Bewertungen $p(v_{lj} \mid w_l)$ nicht benutzt. Stattdessen wird bei Benutzung der Gewichtsparameter z. B. auf Kantenebene einer Kante $j$ im Aussprachenetzwerk für das $k$-te Wort ein Score $\rho_j^{(k)}$ z. B. ein (negativer) Logarithmus der Wahrscheinlichkeit zugeordnet (In arc level weighting, arc $j$ is assigned a score $\rho_j^{(k)}$ In a presently preferred embodiment, this score is a logarithm of the likelihood.) Dieser Score wird anschließend durch die Gewichtsparameter modifiziert (Applying arc level weighting, we obtain a modified score $g_j^{(k)}$: $g_j^{(k)} = u_j^{(k)} \cdot \rho_j^{(k)} + c_j^{(k)}$.). Die Gewichtsparameter selbst werden mittels diskriminativem Training z. B. durch Minimierung der Klassifikationsfehlerrate auf einer Trainingsmenge bestimmt (optimizing the parameters ... using a minimum classification error criterion that maximizes a discrimination between different pronunciation networks).

Es ist nun eine Aufgabe der Erfindung, ein Verfahren und System zum Training von Parametern eines Mustererkennungssystems, die jeweils genau einer Realisierungsvariante eines Inventarmusters zugeordnet sind, und insbesondere ein Verfahren und System zum Training von Parametern eines Spracherkennungssystems, die jeweils genau einer Aussprachevariante eines Vokabularwortes zugeordnet sind, anzugeben, das dem Mustererkennungssystem eine hohe Genauigkeit bei der Erkennung unbekannter Testmuster verschafft.

Diese Aufgabe wird gelöst durch ein Verfahren zum Training von Parametern eines Mustererkennungssystems, die jeweils genau einer Realisierungsvariante eines Inventarmusters zugeordnet sind, mit den Schritten:

- Bereitstellung einer Trainingsmenge von Mustern, und
- Bestimmung der Parameter durch diskriminative Optimierung einer Zielfunktion, und ein System zum Training von Parametern eines Mustererkennungssystems, die jeweils genau einer Realisierungsvariante eines Inventarmusters zugeordnet sind, das
- zur Bereitstellung einer Traningsmenge von Mustern, und
- zur Bestimmung der Parameter durch diskriminative Optimierung einer Zielfunktion vorgesehen ist,

sowie insbesondere durch ein Verfahren zum Training von Parametern eines Spracherkennungssystems, die jeweils genau einer Aussprachevariante eines Vokabularwortes zugeordnet sind, mit den Schritten:

- Bereitstellung einer Trainingsmenge von akustischen Sprachsignalen, und
- Bestimmung der Parameter durch diskriminative Optimierung einer Zielfunktion und ein System zum Training von Parametern eines Spacherkennungssystems, die jeweils genau einer Aussprachevariante eines Vokabularwortes zugeordnet sind, das
- zur Bereitstellung einer Trainingsmenge von akustischen Sprachsignalen, und
- zur Bestimmung der Parameter durch diskriminative Optimierung einer Zielfunktion vorgesehen ist.

Die abhängigen Ansprüche 2 bis 5 beziehen sich auf vorteilhafte Ausführungsformen der Erfindung Sie beziehen sich auf die Form der Parametrisierung der Bewertungen $p(v_{lj} \mid w_l)$, die Details der Zielfunktion, die Natur der verschiedenen Bewertungen und die Methode für die Optimierung der Zielfunktion.

Die Erfindung bezieht sich in den Ansprüchen 9 und 10 jedoch auch auf die Parameter selbst, die mittels einer Verfahrens nach Anspruch 7 trainiert wurden, sowie auf etwaige Datenträger, auf denen solche Parameter gespeichert sind.

Diese und weitere Aspekte und Vorteile der Erfindung werden im Folgenden an Hand der Ausführungsbeispiele und an Hand der beigefügten Zeichnungen näher erläutert. Es zeigen:

Fig. 1  eine Ausführungsform eines erfindungsgemäßen Systems zum Training von jeweils genau einer Aussprachevariante eines Vokabularwortes zugeordneten Parametern eines Spracherkennungssystems, und

Fig. 2  die Ausführung eines erfindungsgemäßen Verfahrens zum Training von jeweils genau einer Aussprachevariante eines Vokabularwortes zugeordneten Parametern eines Spracherkennungssystems in Form eines Flussdiagramms.

Die Parameter $p(\nu_{lj} \mid w_l)$ eines Spracherkennungssystems, die jeweils genau einer Aussprachevariante $\nu_{lj}$ eines Vokabularwortes $w_l$ zugeordnet sind, können direkt einer diskriminativen Optimierung einer Zielfunktion zugeführt werden. Als Zielfunktionen kommen dabei u. a. die Satzfehlerrate, d. h. der Anteil der fehlerhaft erkannten sprachlichen Äußerungen, (minimum classification error), und die Wortfehlerrate, d. h. der Anteil der fehlerhaft erkannten Worte, in Frage. Da es sich dabei um diskrete Funktionen handelt, ist es dem Fachmann geläufig, statt der eigentlichen Fehlerraten geglättete Versionen derselben zu verwenden. Als Optimierungsverfahren z. B. zur Minimierung einer geglätteten Fehlerrate stehen Gradientenverfahren, u. a. das "generalized probabilistic descent (GPD)", wie auch alle anderen Verfahren der nicht linearen Optimierung wie z. B. die Simplexverfahren zur Verfügung.

In einer bevorzugten Ausführungsform der Erfindung wird das Optimierungsproblem jedoch in eine Form gebracht, welche die Anwendung der Methoden der diskriminativen Modellkombination erlaubt. Die diskriminative Modellkombination ist ein aus der WO 99/31654 bekanntes, allgemeines Verfahren zur Bildung log-linearer Kombinationen von Einzelmodellen und zur diskriminativen Optimierung ihrer Gewichtsfaktoren. Zur Vermeidung einer Wiederholung der Methoden der diskriminativen Modellkombination wird daher hiermit die WO 99/31654 in die Anmeldung mit einbezogen.

Zur Anwendung der Methoden der diskriminativen Modellkombination werden die Bewertungen $p(\nu_{lj} \mid w_l)$ nicht unmittelbar selbst als Parameter verwendet, sondern in exponentieller Form mit neuen Parametern $\lambda_{lj}$ dargestellt:

$$p(\nu_{lj} \mid w_l) = e^{\lambda_{lj}}. \tag{6}$$

Während nun die Parameter $\lambda_{lj}$ mit den bekannten Methoden der nicht linearen Optimierung direkt zur Optimierung der Zielfunktion benutzt werden könnten, strebt die diskriminative Modellkombination nach einer log-linearen Form der Modellbewertungen $p(w_1^N \mid x)$. Dazu wird die Summe in Gleichung 3 in einer Approximation auf ihren Hauptbeitrag beschränkt:

$$p(x \mid w_1^{N'}) = p(x \mid \tilde{v}_1^{N'}) \cdot p(\tilde{v}_1^{N'} \mid w_1^{N'}), \tag{7}$$

mit

$$\tilde{v}_1^{N'} = \arg \max_{v_1^{N'}} p(x \mid v_1^{N'}) \cdot p(v_1^{N'} \mid w_1^{N'}), \tag{8}$$

Unter Beachtung der bereits erwähnten Bayes-Formel (vgl. Gleichung 2) und der obigen Gleichungen 5 und 7 erhält man dann den gesuchten log-linearen Ausdruck:

$$\log p_\Lambda(w_1^N \mid x) = -\log Z_\Lambda(x) + \lambda_1 \log p(w_1^N) + \lambda_2 \log p(x \mid \tilde{v}_1^N) + \sum_{l=1}^{D} \lambda_{lj} h_{lj}(\tilde{v}_1^N). \tag{9}$$

Zur Verdeutlichung der Abhängigkeiten der einzelnen Terme von den zu optimierenden Parametern $\Lambda = (\lambda_1, \lambda_2, ..., \lambda_{lj}, ...)$

wurde an den entsprechenden Stellen $\Lambda$ als Index eingeführt. Weiter wurden, wie in der diskriminativen Modellkombination üblich, auch die beiden übrigen Summanden $\log p(w_1^N)$ und $\log p(x|\tilde{v}_{1,}'^N)$ mit entsprechenden Parametern $\lambda_1$ und $\lambda_2$ versehen. Diese müssen aber nicht notwendigerweise optimiert werden, sondern können gleich 1 gewählt werden: $\lambda_1 = \lambda_2 = 1$. Allerdings führt ihre Optimierung typischerweise zu einer höheren Güte des Spracherkennungssystems. Die Größe $Z_\lambda(x)$ hängt nur von der sprachlichen Äußerung $x$ (und den Parametern $\Lambda$) ab und dient nur zur Normierung, sofern es gewünscht ist, die Bewertung $p\Lambda(w_1^N|x)$ als Wahrscheinlichkeitsmodell zu interpretieren. D.h. $Z_\lambda(x)$ wird. so bestimmt, dass die Normierungsbedingung

$$\sum_{w_1^N}$$

$p\,\Lambda(w_1^N|x)=1$ erfüllt wird.

Als Zielfunktionen benutzt die diskriminative Modellkombination u. a. verschiedene Formen geglätteter Wortfehlerraten, die auf der Trainingsmenge ermittelt werden. Dazu bestehe die Trainingsmenge aus den $H$ sprachlichen Äußerungen $x_n$, $n = 1,...,H$. Jeder solchen Äußerung $x_n$ ist eine gesprochene Wortfolge $^{(n)}w_1{}^Ln$ der Länge $L_n$ zugeordnet, die wir hier vereinfachend als Wortfolge $k_n$ bezeichnen. Dabei muss es sich bei $k_n$ nicht notwendigerweise um die tatsächlich gesprochene Wortfolgs handeln, sondern im Falle der so genannten unüberwachten Adaption würde $k_n$ z. B. erst durch einen vorbereitenden Erkennungsschritt ermittelt. Weiter wird z. B. durch einen Erkennungsschritt, der einen so genannten Wortgraphen oder eine N-best Liste berechnet, zu jeder Äußerung $x_n$ eine Menge $^{(n)}k_i$, $i = 1,...,K_n$ von $K_n$ weiteren Wortfolgen ermittelt, die mit der gesprochenen Wortfolge $k_n$ um die höchste Bewertung bei der Erkennung konkurrieren. Vereinfachend werden diese konkurrierenden Wortfolgen mit $k \neq k_n$ bezeichnet, während die Bezeichnung $k$ als Oberbegriff für die Wortfolgen $k_n$ und $k \neq k_n$ verwendet wird.

Das Spracherkennungssystem ermittelt zu den Wortfolgen $k_n$ und $k (\neq k_n)$ ihre Bewertungen $p_\Lambda(k_n|x_n)$ und $p_\Lambda(k|x_n)$, die angeben, wie gut sie zu der sprachlichen Äußerung $x_n$ passen. Da das Spracherkennungssystem die Wortfolge $k_n$ bzw. $k$ mit der höchsten Bewertung als Erkennungsergebnis wählt, berechnet sich die Wortfehlerrate $E(\Lambda)$ als Levenshtein-Abstand $\Gamma$ zwischen der gesprochenen (bzw. der als gesprochen angenommenen) Wortfolge $k_n$ und der ausgewählten Wortfolge:

$$E(\Lambda) = \frac{1}{\sum_{n=1}^{H} L_n} \sum_{n=1}^{H} \Gamma\left(k_n, \arg \max_k (\log \frac{p_\Lambda(k|x_n)}{p_\Lambda(k_n|x_n)})\right) \qquad (10)$$

In der diskriminativen Modellkombination wird diese Wortfehlerrate mit Hilfe einer "Indikatorfunktion" $S(k,n,\Lambda)$ zu einer stetigen und differenzieribaren Funktion $E_s(\Lambda)$ geglättet:

$$E_S(\Lambda) = \frac{1}{\sum_{n=1}^{H} L_n} \sum_{n=1}^{H} \sum_{k \neq k_n} \Gamma(k_n, k) S(k, n, \Lambda). \qquad (11)$$

Die Indikatorfunktion $S(k,n,\Lambda)$ sollte dabei für die vom Spracherkennungssystem ausgewählte Wortfolge mit der höchsten Bewertung nahe an 1 sein, während sie für alle übrigen Wortfolgen nahe an 0 sein sollte. Eine mögliche Wahl ist:

$$S(k, n, \Lambda) = \frac{p_\Lambda(k|x_n)^\eta}{\sum_{k'} p_\Lambda(k'|x_n)^\eta} \qquad (12)$$

mit einer geeigneten Konstante $\eta$, die man im einfachsten Fall gleich 1 wählen kann.

Die Zielfunktion aus Gleichung 11 lässt sich z. B. mit einem iterativen Gradientenverfahren optimieren, wobei sich nach Durchführen der entsprechenden partiellen Ableitungen für den Fachmann folgende Iterationsgleichung für die Parameter $\lambda_{lj}$ der Aussprachevarianten ergibt:

$$\lambda_{lj}^{(I+1)} = \lambda_{lj}^{(I)} - \frac{\varepsilon \cdot \eta}{\sum_{n=1}^{H} L_n} \sum_{n=1}^{H} \sum_{k \neq k_n} S(k,n,\Lambda^{(I)}) \cdot \tilde{\Gamma}(k,n,\Lambda^{(I)}) \cdot [h_{lj}(\tilde{v}(k)) - h_{lj}(\tilde{v}(k_n))] \,.(13)$$

Dabei ergeben sich durch einen Iterationsschritt mit der Schrittweite $\varepsilon$ die Parameter $\lambda_{lj}^{(I+1)}$ der $(I+1)$ -ten Iterationsstufe aus den Parametern $\lambda_{lj}^{(I)}$ der $I$-ten Iterationsstufe, $\tilde{v}(k)$ und $\tilde{v}(k_n)$ bezeichnen die bestbewerteten Aussprachevariantenfolgen (im Sinne von Gleichung 8) zu den Wortfolgsn $k$ und $k_n$, und $\tilde{\Gamma}(k,n,\Lambda)$ ist eine Abkürzung für

$$\tilde{\Gamma}(k,n,\Lambda) = \Gamma(k,k_n) - \sum_{k' \neq k_n} S(k',n,\Lambda)\Gamma(k',k_n)\,. \tag{14}$$

Da es sich bei der Größe $\tilde{\Gamma}(k,n,\Lambda)$ um die Abweichung der Fehlerrate $\Gamma(k,k_n)$ um die mit $S(k',n,\Lambda)$ gewichtete Fehlerrate aller Wortfolgen handelt, kann man Wortfolgen $k$ mit $\tilde{\Gamma}(k,n,\Lambda) < 0$ als "gute" Wortfolgen bezeichnen, da sie eine geringere als die mit $S(k',n,\Lambda)$ gewichtete Fehlerrate aufweisen. Daher sagt die Iterationsvorschrift aus Gleichung 13, dass die Parameter $\lambda_{lj}$ und damit die Bewertungen $p(v_{lj}\mid w_l)$ für solche Aussprachevarianten $v_{lj}$ zu vergrößern sind, die, gemessen an der gesprochenen Wortfolgs $k_n$, häufig in guten Wortfolgen auftreten, d. h. für die in guten Wortfolgen $h_{lj}(\tilde{v}(k)) - h_{lj}(\tilde{v}(k_n)) > 0$ ist. Entsprechendes gilt für Varianten, die selten in schlechten Wortfolgen auftreten. Dagegen sind die Bewertungen zu reduzieren für Varianten, die in guten Wortfolgen selten und/oder in schlechten Wortfolgen häufig sind. Diese Interpretation zeigt beispielhaft die vorteilhafte Wirkung der Erfindung.

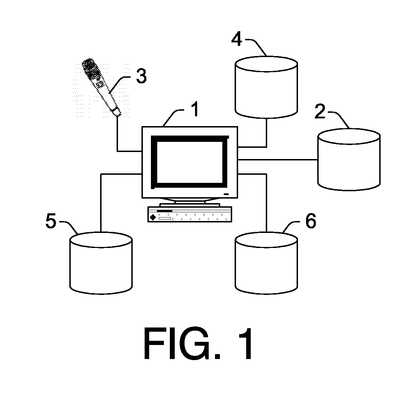

Fig. 1 zeigt eine Ausführungsform eines erfindungsgemäßen Systems zum Training von jeweils genau einer Aussprachevariante eines Vokabularwortes zugeordneten Parametern eines Spracherkennungssystems. Auf dem Computer 1 wird unter Kontrolle eines im Programmspeicher 2 gespeicherten Programms ein erfindungsgemäßes Verfahren zum Training von jeweils genau einer Aussprachevariante eines Vokabularwortes zugeordneten Parametern eines Spracherkennungssystems abgearbeitet. Das Mikrofon 3 dient zur Aufnahme von sprachlichen Äußerungen, die im Äußerungsspeicher 4 gespeichert werden. Statt der Aufnahme über das Mikrofon 3 können solche sprachlichen Äußerungen jedoch auch von anderen Datenträgern oder über Netzwerkverbindungen in den Äußerungsspeicher 4 übertragen werden.

Die Parameteispeicher 5 und 6 dienen zur Aufnahme der Parameter. Dabei wird in dieser Ausführungsform davon ausgegangen, dass ein iteratives Optimierungsverfahren der oben genannten Art durchgeführt wird. Der Parameteispeicher 5 enthält dann z. B. bei Berechnung der Parameter der $(I+1)$ -ten Iterationsstufe die in dieser Stufe bekannten Parameter der $I$-ten Iterationsstufe, während der Parameterspeicher 6 die neuen Parameter der $(I+1)$ -ten Iterationsstufe aufnimmt. In der nächsten Iterationsstufe, d. h in diesem Beispiel in der $(I+2)$ -ten Iterationsstufe, tauschen die Parameterspeicher 5 und 6 dann ihre Rollen.

In dieser Ausführungsform wird ein erfindungsgemäßes Verfahren auf einem allgemeinen Computer 1 ausgeführt. Dieser wird üblicherweise die Speicher 2, 5 und 6 in einem gemeinsamen Aufbau enthalten, während der Äußerungsspeicher 4 eher auf einem zentralen, über ein Netzwerk erreichbaren Datenserver liegen wird. Zur Abarbeitung des Verfahrens kann jedoch auch spezielle Hardware benutzt werden, die dabei so ausgelegt werden kann, dass das gesamte Verfahren oder auch nur Teile davon besonders schnell ausgeführt werden können.

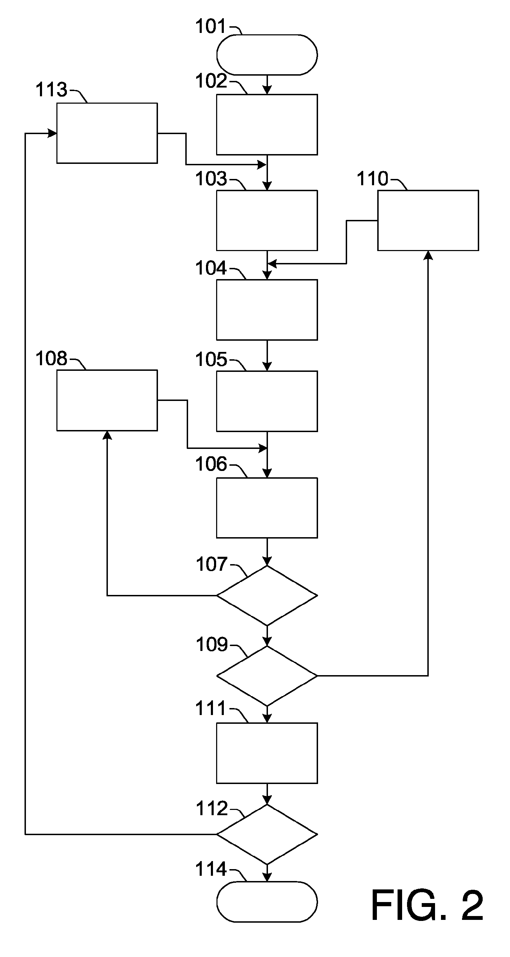

Fig 2 zeigt die Ausführung eines erfindungsgemäßen Verfahrens zum Training von jeweils genau einer Aussprachevariante eines Vokabularwortes zugeordneten Parametern eines Spracherkennungssystems in Form eines Flussdiagramms. Nach dem Startblock 101, in dem allgemeine Vorbereitungen getroffen werden, werden im Prozessblock 102 die Startwerte $\Lambda^{(0)}$ für die Parameter gewählt und die Iterationszählervariable $I$ auf 0 gesetzt: $I = 0$. Zur Bestimmung geeigneter Startwerte kann z. B. eines der eingangs erwähnten "maximum likelihood" Verfahren zur Schätzung der Bewertungen $p(v_{lj}\mid w_l)$ verwendet werden, aus denen man dann durch Bildung der Logarithmusfunktion die Startwerte der $\lambda_{lj}^{(0)}$ erhält. Im Block 103 beginnt dann der Durchlauf durch die Trainingsmenge der sprachlichen Äußerungen, wozu die Zählervariable $n$ auf 1 gesetzt wird: $n = 1$. Die Bestimmung der konkurrierenden Wortfolgen $k \neq k_n$ zur sprachlichen Äußerung $x_n$ erfolgt im Block 104. Ist die gesprochene Wortfolge $k_n$ zur sprachlichen Äußerung $x_n$ nicht bereits durch die Trainingsdaten bekannt, so kann diese jetzt auch hier im Block 104 mit der aktuellen Parametrisierung des Spracherkennungssystems geschätzt werden. Es ist aber auch möglich, eine solche Schätzung nur einmal vorab z. B. im Block 102 durchzuführen. Weiter kann zur Schätzung der gesprochenen Wortfolge $k_n$ auch ein separates Spracherkennungssystem benutzt werden.

Im Block 105 beginnt der Durchlauf durch die Mengs der konkurrierenden Wortfolgsn $k \neq k_n$, wozu die Zählervariable $k$ auf 1 gesetzt wird: $k = 1$. Die Berechnung der einzelnen Terme und die Akkumulation der in Gleichung 13 auftauchenden Doppelsumme über die Zählervariablen $n$ und $k$ erfolgt im Block 106. Im Entscheidungsblock 107, der den Durchlauf durch die Menge der konkurrierenden Wortfolgen $k \neq k_n$ begrenzt, wird überprüft, ob noch weitere konkurrierenden Wortfolgen $k \neq k_n$ vorhanden sind. Ist dies der Fall, so verzweigt die Kontrolle zum Block 108, in dem die Zählervariable $k$ um 1 erhöht wird: $k = k +1$, worauf die Kontrolle wieder zum Block 106 geht. Anderenfalls geht die Kontrolle an den Entscheidungsblock 109, der den Durchlauf durch die Trainingsmenge der sprachlichen Äußerungen begrenzt, wozu überprüft wird, ob noch weitere Trainingsäußerungen vorhanden sind. Ist dies der Fall, so wird im Block 110 die Zählervariable $n$ um 1 erhöht: $n = n + 1$, und die Kontrolle tritt wieder in Block 104 ein. Anderenfalls ist der Durchlauf durch die Trainingsmenge der sprachlichen Äußerungen beendet und die Kontrolle wird an Block 111 übergeben.

Im Block 111 werden die neuen Werte der Parameter $\Lambda$ berechnet, in der ersten Iterationsstufe $I$=1 also die Werte $\Lambda^{(1)}$. Im folgenden Entscheidungsblock 112 wird ein Stopkriterium überprüft, das feststellt, ob die Optimierung genügend konvergiert ist. Dazu sind verschiedene Methoden bekannt. Z. B. kann gefordert werden, dass die relativen Änderungen der Parameter oder die der Zielfunktion unter eine vorgegebene Schwelle fallen. In jedem Fall kann die Iteration jedoch nach einer vorgegebenen Maximalzahl von Iterationsschritten abgebrochen werden.

Ist die Optimierung noch nicht genügend konvergiert, so wird im Block 113 die Iterationszählervariable $I$ um 1 erhöht: $I= I+1$, wonach im Block 103 wieder in die Iterationsschleife eingetreten wird. Anderenfalls wird das Verfahren im Endblock 114 mit allgemeinen Aufräumarbeiten beendet.

Während im Vorhergehenden ein spezielles iteratives Optimierungsverfahren zur Bestimmung der Parameter $\lambda_{lj}$ näher erläutert wurde, ist dem Fachmann bewusst, dass auch andere Optimierungsmethoden anwendbar sind. Insbesondere sind alle im Zusammenhang mit der diskriminativen Modellkombination bekannten Verfahren nutzbar. An dieser Stelle wird beispielhaft wieder auf die in der WO 99/51654 offenbarten Verfahren verwiesen. Dort wind insbesondere auch eine Methode beschrieben, die es erlaubt, die Parameter nicht iterativ in geschlossener Form zu bestimmen. Dabei ergibt sich der Parametervektor $\Lambda$ durch Lösung eines linearen Gleichungssystems in der Form $\Lambda = Q^{-1} P$, wobei sich die Matrix $Q$ und der Vektor $P$ aus Bewertungskorrelationen und der Zielfunktion ergeben. Für Details wird auf die WO 99/31654 verwiesen.

Nach Bestimmung der Parameter $\lambda_{lj}$ lassen sich diese noch zur Auswahl der im Aussprachelexikon mitgeführten Aussprachevarianten $\nu_{lj}$ verwenden. So können z. B. Varianten $\nu_{lj}$ mit Bewertungen $p(\nu_{lj} \mid w_l)$, die kleiner als ein vorgegebener Schwellwert sind, aus dem Aussprachelexikon entfernt werden. Weiter kann ein Aussprachelexikon mit einer vorgegebenen Anzahl von Varianten $\nu_{lj}$ erstellt werden, indem man eine geeignete Anzahl der Varianten $\nu_{lj}$ mit den niedrigsten Bewertungen $p(\nu_{lj} \mid w_l)$ entfernt.

**Patentansprüche**

1. Verfahren zum Training von Parametern eines Spracherkennungssystems, die jeweils genau einer Aussprachevariante eines Vokabularwortes zugeordnet sind, mit den Schritten:

    - Bereitstellung einer Trainingsmenge von akustischen Sprachsignalen, und
    - Bestimmung der Parameter durch diskriminative Optimierung einer Zielfunktion.

2. Verfahren nach Anspruch 1,
   **dadurch gekennzeichnet,**
   **dass** der der $j$ -ten Aussprachevariante $\nu_{lj}$ des $l$-ten Vokabularwortes $w_l$ zugeordnete Parameter $\lambda_{lj}$ in folgendem exponentiellem Zusammenhang mit einer Bewertung $p(\nu_{lj} \mid w_l)$ steht, dass das Wort $w_l$ als die Aussprachevariante $\nu_{lj}$ ausgesprochen wird:

$$p(\nu_{lj} \mid w_l) = e^{\lambda_{lj}}.$$

3. Verfahren nach Anspruch 1 oder 2,
   **dadurch gekennzeichnet,**
   **dass** die Zielfunktion als eine stetigs und differenzierbare Funktion der folgenden Größen berechnet wird:

    - jeweiligen Levenshtein-Abständen $\Gamma(k_n,k)$ zwischen einer einem jeweiligen akustischen Sprachsignal $x_n$ der Trainingsmenge zugeordneten gesprochenen Wortfolge $k_n$ und weiteren dem Sprachsignal zugeordneten und mit $k_n$ konkurrierenden Wortfolgen $k \neq k_n$, und
    - jeweiligen Bewertungen $p_\Lambda(k \mid x_n)$ und $p_\Lambda(k_n \mid x_n)$, wie gut die weiteren Wortfolgen $k \neq k_n$ und die gesprochene Wortfolge $k_n$ zu dem Sprachsignal $x_n$ passen.

4. Verfahren nach einem der Ansprüche 1 bis 3,
**dadurch gekennzeichnet,**

- **dass** als jeweilige Bewertung $p(\nu_{lj} \mid w_l)$ ein Modell für die Wahrscheinlichkeit verwendet wird, dass das Wort $w_l$ als die Aussprachevariante $\nu_{lj}$ ausgesprochen wird,
- **dass** als jeweilige Bewertung $p_\Lambda(k_n \mid x_n)$ ein Modell für die Wahrscheinlichkeit verwendet wird, dass die dem jeweiligen akustischen Sprachsignal $x_n$ der Trainingsmenge zugeordnete gesprochene Wortfolge $k_n$ als Sprachsignal $x_n$ gesprochen wird, und/oder
- **dass** als jeweilige Bewertung $p_\Lambda(k \mid x_n)$ ein Modell für die Wahrscheinlichkeit verwendet wird, dass die jeweilige konkurrierende Wortfolge $k \neq k_n$ als Sprachsignal $x_n$ gesprochen wird.

5. Verfahren nach einem der Ansprüche 1 bis 4,
**dadurch gekennzeichnet,**
**dass** die diskriminative Optimierung der Zielfunktion mittels einer der Methoden der diskriminativen Modellkombination durchgeführt wird.

6. System zum Training von Parametern eines Spracherkennungssystems, die jeweils genau einer Aussprachevariante eines Vokabularwortes zugeordnet sind, das

- zur Bereitstellung einer Trainingsmenge von akustischen Sprachsignalen, und
- zur Bestimmung der Parameter durch diskriminative Optimierung einer Zielfunktion vorgesehen ist.

7. Verfahren zum Training von Parametern eines Mustererkennungssystems, die jeweils genau einer Realisierungsvariante eines Inventarmusters zugeordnet sind, mit den Schritten:

- Bereitstellung einer Trainingsmenge von Mustern, und
- Bestimmung der Parameter durch diskriminative Optimierung einer Zielfunktion.

8. System zum Training von Parametern eines Mustererkennungssystems, die jeweils genau einer Realisierungsvariante eines Inventarmusters zugeordnet sind, das

- zur Bereitstellung einer Trainingsmenge von Mustern, und
- zur Bestimmung der Parameter durch diskriminative Optimierung einer Zielfunktion vorgesehen ist.

9. Parameter eines Mustererkennungssystems, die jeweils genau einer Realisierungsvariante eines Inventarmusters zugeordnet sind und die unter Benutzung eines Verfahrens gemäß Anspruch 7 erzeugt wurden.

10. Datenträger mit Parametern eines Mustererkennungssystems nach Anspruch 9.

FIG. 1

FIG. 2